(19) Europäisches Patentamt
European Patent Office
Office européen des brevets

(11) **EP 4 357 997 A1**

(12) **EUROPÄISCHE PATENTANMELDUNG**

(43) Veröffentlichungstag:
**24.04.2024  Patentblatt 2024/17**

(51) Internationale Patentklassifikation (IPC):
*G06Q 10/1093* (2023.01)    *G06Q 10/063* (2023.01)

(21) Anmeldenummer: 22202472.1

(52) Gemeinsame Patentklassifikation (CPC):
**G06Q 10/1097; G06Q 10/063**

(22) Anmeldetag: **19.10.2022**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder:
• **Siemens Aktiengesellschaft
80333 München (DE)**
• **Friedrich-Alexander-Universität
Erlangen-Nürnberg
91054 Erlangen (DE)**

(72) Erfinder:
• **Pfab, Korbinian
92256 Hahnbach (DE)**
• **Schmidt, Konstantin
90429 Nürnberg (DE)**
• **Udluft, Steffen
82223 Eichenau (DE)**
• **von Beuningen, Anja
99085 Erfurt (DE)**

(74) Vertreter: **Siemens Patent Attorneys
Postfach 22 16 34
80506 München (DE)**

(54) **VERFAHREN ZUM ERMITTELN EINER FERTIGUNGSREIHENFOLGE VON FERTIGUNGSAUFTRÄGEN EINER FERTIGUNGSANLAGE, FERTIGUNGSANLAGE-SYSTEM, COMPUTERPROGRAMM SOWIE ELEKTRONISCH LESBARER DATENTRÄGER**

(57)    Verfahren zum Ermitteln einer Fertigungsreihenfolge von Fertigungsaufträgen einer Fertigungsanlage, Fertigungsanlage-System, Computerprogramm sowie elektronisch lesbarer Datenträger

Die Erfindung betrifft ein Verfahren zum Ermitteln einer Fertigungsreihenfolge (6) von Fertigungsaufträgen (5) einer Fertigungsanlage (1), wobei
- das Ermitteln der Fertigungsreihenfolge (6) durch ein lernfähiges System (7) erfolgt, das darauf trainiert ist, anhand von vergangenen Daten der Fertigungsanlage (1) und/oder aktuellen Daten der Fertigungsanlage (1) die Fertigungsreihenfolge (6) zu ermitteln,

- dem lernfähigen System (7) Informationen betreffend einer Auslastung der Fertigungsanlage (1) und/oder Informationen betreffend Fertigungsaufträge (5) bereitgestellt werden,
- das Ermitteln der Fertigungsreihenfolge (6) anhand der Informationen betreffend die Auslastung der Fertigungsanlage (1) und/oder der Informationen betreffend die Fertigungsaufträge (5) erfolgt.

Des Weiteren betrifft die Erfindung ein Verfahren zum Betreiben einer Fertigungsanlage (1), ein Fertigungsanlage-System (3), ein Computerprogramm sowie einen elektronisch lesbaren Datenträger.

**Beschreibung**

Die Erfindung betrifft ein Verfahren zum Ermitteln einer Fertigungsreihenfolge von Fertigungsaufträgen einer Fertigungsanlage.

Des Weiteren betrifft die Erfindung ein Verfahren zum Betreiben einer Fertigungsanlage.

Ebenfalls betrifft die Erfindung ein Fertigungsanlage-System, ein Computerprogramm sowie einen elektronisch lesbaren Datenträger.

Produktionssysteme und Fertigungsnetzwerke werden durch den zunehmenden Kostendruck und die verstärkte Kundenanforderung nach individuellen beziehungsweise spezialisierten Produkten zunehmend flexibler, was jedoch die Komplexität dieser Systeme erhöht. So lässt sich aus dem Ideal der Industrie 4.0 die Vision der Losgröße eins in Massenproduktion ableiten, was als Endstadium der beschriebenen Entwicklung zu erwarten ist. Eine Fertigung, welche dieses Maß an Flexibilität ermöglicht, stellt jedoch auch eine enorme Herausforderung in Bezug auf die Planung der Fertigungsreihenfolge dar. Schließlich sind einzelne Module eng, aber flexibel miteinander vernetzt und das gefertigte Produktportfolio wechselt rapide, was eine Planung und auch den allgemeinen Überblick erschwert. Daher besteht das Problem, dass eine optimale Produktionsreihenfolgeplanung beziehungsweise Ziele, wie etwa Anlagenausnutzung, Energieeffizienz, oder auch Durchlaufzeit, auf übergeordneten Ebenen, insbesondere mit wechselnden Produkten, kaum erreicht werden kann.

Beispielsweise gibt es verschiedene Ansätze, um das so genannte "Statistical economic lot size problem" zu lösen. In diesem Problem gilt es die Fertigungsreihenfolge eines einzelnen Produktionsmittels zu optimieren. Hierbei wird jedoch stets ein fixes Produktportfolio angenommen. Hierbei kommen oftmals mathematische Ansätze zur Optimierung dieses Problems zur Anwendung.

In der Praxis wird bisher eine solche Planung durch Produktionsmitarbeiter und Fertigungsplaner übernommen. Es gibt auch sogenannte "Advanced planning and scheduling Systems", welche die lokale Optimierung einzelner Produktionsmittel unterstützt, jedoch auch ein fixes Produktionsportfolio benötigt und eine regelbasierte Optimierung vorgenommen werden muss, wobei die Regeln jedoch durch das Fertigungspersonal erst erdacht beziehungsweise definiert werden müssen.

Des Weiteren gibt es noch Planungslogiken wie etwas First-in-First-out, welche aber keinesfalls als optimierte Planung angesehen werden können.

Daher ist eine Aufgabe der vorliegenden Erfindung die Fertigung von Produkten mittels einer Fertigungsanlage flexibel zu gestalten, sodass die Fertigungsanlage flexibel auf die verschiedensten Fertigungssituationen angepasst werden kann.

Diese Aufgabe wird durch ein Verfahren, ein Fertigungsanlage-System, ein Computerprogramm und einen elektronisch lesbaren Datenträger gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Ermitteln einer Fertigungsreihenfolge von Fertigungsaufträgen einer Fertigungsanlage, wobei

- das Ermitteln der Fertigungsreihenfolge durch ein lernfähiges System erfolgt, das darauf trainiert ist, anhand von vergangenen Daten der Fertigungsanlage und/oder aktuellen Daten der Fertigungsanlage die Fertigungsreihenfolge zu ermitteln,
- dem lernfähigen System Informationen betreffend einer Auslastung der Fertigungsanlage und/oder Informationen betreffend Fertigungsaufträge bereitgestellt werden,
- das Ermitteln der Fertigungsreihenfolge anhand der Informationen betreffend die Auslastung der Fertigungsanlage und/oder der Informationen betreffend die Fertigungsaufträge erfolgt.

Durch das vorgeschlagene Verfahren können Fertigungsaufträge der Fertigungsanlage effizienter und insbesondere flexibler abgearbeitet beziehungsweise ausgeführt werden. Durch das vorgeschlagene Verfahren kann eine Fertigungsreihenfolge situationsabhängig an die jeweils zu fertigenden Produkte der Fertigungsanlage zur Verfügung gestellt werden.

Mit Hilfe des lernfähigen Systems kann eine situationsangepasste Fertigungsreihenfolge von Fertigungsaufträgen der Fertigungsanlage bereitgestellt werden. Daher kann das lernfähige System anhand von vergangenen Daten und/oder aktuellen Daten der Fertigungsanlage trainiert werden, sodass das Ermitteln der Fertigungsreihenfolge mittels eines fortlaufenden Lernens verbessert werden kann. Somit kann die Fertigungsanlage je nachdem, welche Aufträge beziehungsweise Fertigungsaufträge abzuarbeiten sind und/oder je nach gewünschtem Produkt und/oder bei einer Änderung des Produktportfolios eine passende Fertigungsreihenfolge ermitteln, sodass die Fertigungsanlage effizient betrieben werden kann und insbesondere die Fertigungsaufträge in einer effizienten, wirtschaftlichen und zeiteffizienten Reihenfolge abarbeiten kann.

Insbesondere ermöglicht das vorgeschlagene Verfahren eine automatisiert, intelligente und flexible Produktionsreihenfolgenplanung für eine Fertigungsproduktion. Folglich kann hier die Bildung einer Fertigungsreihenfolge von Produktionsaufträgen von Produktionsanlagen vorgenommen werden. Dies kann in der Produktionsplanung systemseitig erfolgen.

Bei der Fertigungsreihenfolge kann es sich um eine Produktionsreihenfolge handeln. Die Fertigungsaufträge können auch als Produktionsaufträge bezeichnet werden. Die Fertigungsanlage kann als Produktionsanlage bezeichnet werden. Insbesondere handelt es sich bei der Fertigungsanlage um ein komplexes System, welches mehrere Produktionseinheiten beziehungsweise Fertigungsstraßen aufweisen kann. Mit Hilfe der Fertigungsanlage kann also beispielsweise eine komplette Produktion beziehungsweise Produktionshalle zum Herstellen verschiedenster Produkte ausgebildet sein.

Mit dem vorgeschlagenen Verfahren kann für eine Fertigungsanlage beziehungsweise für ein Fertigungsnetz eine gesamtheitliche Fertigungsauftragsplanung vorgenommen werden. Im Gegensatz zu herkömmlichen Methoden, wo für einzelne Fertigungseinheiten Planungen durchgeführt werden, kann mit der vorliegenden Erfindung für ein gesamtes Fertigungsnetz eine Auftragsplanung durchgeführt werden.

Beispielsweise kann es sich bei dem lernfähigen System um ein lernfähiges Produktionsplanungssystem handeln. Insbesondere kann das lernfähige System ein KI (künstliche Intelligenz)-Modell sein.

Mithilfe des vorgeschlagenen Verfahrens können nicht wie im Stand der Technik einzelne Fertigungseinheiten optimiert werden, sondern die gesamte Fertigungsanlage beziehungsweise im Fertigungsnetz. Ebenfalls können mit dem vorgeschlagenen Verfahren auch einzelne Fertigungseinheiten optimiert werden. Beispielsweise kann das lernfähige System als Maschinen-Lern-Modul bezeichnet werden. Insbesondere kann mithilfe des vorgeschlagenen Verfahrens die Auslastung der Fertigungsanlage optimiert werden.

Speziell bietet das vorgeschlagene Verfahren die Möglichkeit, um eine dynamische produktflexible Produktionsreihenfolgeplanung mittels "Reinforcement Learning" durchzuführen. Insbesondere kann für jede Entscheidung dem lernfähigen System Informationen über die einzelnen zu planenden Fertigungsaufträgen übergeben werden. Dadurch kann erreicht werden, dass auch Produkte geplant werden können, welche im eigentlichen Training des lernfähigen Systems nicht inbegriffen waren. Folglich ist es nicht notwendig, das lernfähige System für jede Änderung des Produktportfolios neu zu trainieren, sondern lediglich, wenn sich die Anzahl der Produktionsmittel, also Produktionseinheiten, ändert. Dadurch können Kosten und Aufwand durch das Trainieren des lernfähigen Systems vermieden werden. Dies kann vor allem auch einen großen Unterschied zu gängigen Lösungsansätzen für Reihenfolgeplanungen im Stand der Technik darstellen.

Beispielsweise kann das lernfähige System in einem übergeordneten System oder einem übergeordneten Algorithmus der Fertigungsanlage integriert werden. Dadurch kann erreicht werden, dass eine variierende Anzahl von Fertigungsaufträgen geplant werden kann. Dadurch kann das lernfähige System kleiner gestaltet werden, was Rechenleistung spart und es ermöglicht, dass auch schwankende Auftragseingänge optimal geplant werden können. Somit kann eine Flexibilität in Bezug auf die Länge der Liste der zu bearbeitenden Fertigungsaufträge erreicht werden. Des Weiteren kann die Fertigungsanlage eine Flexibilität in Bezug auf das Produktportfolio aufweisen.

Vor allem kann durch das vorgeschlagene Verfahren eine optimierte Planung eines Fertigungsnetzes beziehungsweise Fertigungsanlage beziehungsweise Fertigungssystem erreicht werden. Speziell kann die Planung eines ganzen Fertigungsnetzes, wie etwa einer modularen, außenverketteten Produktionsanlage, einer Fertigungshalle oder standortübergreifenden Fertigungen optimiert werden. Dadurch ist der zu erwartende Vorteil der optimierten Planung größer als bei einer reinen lokalen Optimierung einzelner Produktionsanlagen. Dies kann zu einer Erweiterung einer übergeordneten Planungsebene für die Reihenfolgenplanung genutzt werden.

Insbesondere handelt es sich bei dem vorgeschlagenen Verfahren um ein computerimplementiertes Verfahren. Speziell kann es sich bei dem vorgeschlagenen Verfahren um eine cloudbasierte Anwendung beziehungsweise Verfahren handeln. Des Weiteren ist es auch denkbar, dass das vorgeschlagene Verfahren auf einer Edge-Infrastruktur implementiert ist.

In einem Ausführungsbeispiel ist vorgesehen, dass das lernfähige System derart trainiert ist, das Ermitteln der Fertigungsreihenfolge auf Basis der vergangenen Daten der Fertigungsanlage und/oder Basisfaktor Daten der Fertigungsanlage zu lernen. Somit kann ein fortlaufender Lernprozess und insbesondere ein vorteilhafter Lernerfolg vorgenommen werden, sodass das lernfähige System effizienter das Ermitteln der Fertigungsreihenfolge vornehmen kann. Vor allem können dem lernfähigen System die verschiedensten Eingangsgrößen beziehungsweise Eingangsparameter zur Verfügung gestellt werden, um als Ausgangsgröße zumindest die Fertigungsreihenfolge zu erhalten.

Bei den vergangenen Daten der Fertigungsanlage kann es sich um eine Auslastung, eine Anzahl an zu fertigenden Produkten, eine Zeitdauer für das Bearbeiten eines Fertigungsauftrags, eine Anzahl an Fertigungseinheiten der Fertigungsanlagen oder um anderweitige vergangene Informationen bei der Ausführung von Fertigungsaufträgen der Fertigungsanlage in der Vergangenheit handeln. Anhand dieser vergangenen Daten können zukünftige Fertigungsaufträge anhand einer effizienten Fertigungsreihenfolge besser bearbeitete beziehungsweise abgearbeitet werden.

Die aktuellen Daten der Fertigungsanlage können beispielsweise Informationen betreffend der aktuellen Auslastung der Fertigungsanlage, einer Anzahl von Fertigungsstraßen, aktuell bereits durchgeführte Fertigungsaufträge oder anderweitige aktuelle Informationen der Fertigungsanlagen beinhalten. Mithilfe der Informationen betreffende Auslastung der Fertigungsanlage kann eine aktuelle Auslastung beziehungsweise eine aktuelle noch zur Verfügung stehende Kapazität der Fertigungsanlage und insbesondere der einzelnen Fertigungseinheiten der Fertigungsanlage bereitgestellt werden. Mit den Informationen betreffend die Fertigungsaufträge kann eine Anzahl an herzustellenden Produkten eines jeweiligen Fertigungsauftrags, die verschiedenen Produktportfolios der Fertigungsaufträge, ein Endtermin, bis wann die Fertigungsaufträge abgearbeitet werden müssen, oder sonstige logistische und/oder produktspezifische Informationen beziehungsweise Fertigungsaufträge bereitgestellt werden.

In einem Ausführungsbeispiel ist vorgesehen, dass das Ermitteln der Fertigungsreihenfolge mittels einer Bestärken-des-Lernen-Methode erfolgt. Zusätzlich oder anstatt kann das Lernen des Ermittelns der Fertigungsreihenfolge abhängig von einer Belohnungsfunktion der Bestärkendes-Lernen-Methode dynamisch angepasst werden. Durch die Nutzung der Bestärken-des-Lernen-Methode (Englisch "reinforcement learning") können Fertigungsziele beziehungsweise die Abarbeitung der Fertigungsaufträge durch eine Belohnungsfunktion beschrieben werden. Dadurch können verschiedene Ziele, wie zum Beispiel Auslastung, Durchlaufzeitminimierung oder auch Energieeinsparung sowohl einzeln als auch kombiniert berücksichtigt werden und die Fertigung auf die Erreichung dieser Ziele optimiert werden. Somit kann die Fertigungsanlage insbesondere die Abarbeitung der ermittelnden Fertigungsreihenfolge anpassbar auf die verschiedensten Optimierungsziele vorgenommen werden. Somit können komplexe Zielsetzungen für das Abarbeiten von bestimmten Fertigungsaufträgen optimiert werden.

In einem Ausführungsbeispiel ist vorgesehen, dass das lernfähige System darauf trainiert ist, anhand von den vergangenen Daten der Fertigungsanlage, insbesondere von historischen Daten und/oder aktuellen Daten der Fertigungsanlage in einem Simulationsmodell die Fertigungsreihenfolge zu ermitteln. Unter der Bestärkendes-Lernen-Methode ist eine Reihe von Methoden des maschinellen Lernens zu verstehen, bei denen das lernfähige System beziehungsweise ein Agent selbstständig eine Strategie erlernt, um erhaltene Belohnungen zu maximieren. Dabei kann dem lernfähigen System nicht vorgezeigt werden, welche Aktion in welcher Situation die beste ist, sondern es erhält durch die Interaktion mit seiner Umwelt zu einem bestimmten Zeitpunkt eine Belohnung, die auch negativ sein kann.

Mithilfe des Simulationsmodells kann das lernfähige System anhand der verschiedensten Simulationen, insbesondere virtuellen Simulationen, optimiert beziehungsweise verbessert werden. Insbesondere kann das Trainieren des lernfähigen Systems mittels diskreter Eventsimulation anhand von historischen Daten durchgeführt werden.

In einem Ausführungsbeispiel ist vorgesehen, dass das lernfähige System dadurch trainiert ist, anhand von den vergangenen Daten der Fertigungsanlage, insbesondere von historischen Daten und/oder den aktuellen Daten der Fertigungsanlage in einem datengetriebenen Modell die Fertigungsreihenfolge zu ermitteln. Bei dem datengetriebenen Modell kann es sich um ein datengesteuertes Modell handeln. Mithilfe des datengetriebenen Modells kann das lernfähige System besser trainiert werden, sodass eine effizientere und optimalere Fertigungsreihenfolge der Fertigungsaufträge ermittelt werden kann.

In einem Ausführungsbeispiel ist vorgesehen, dass beim Ermitteln der Fertigungsreihenfolge zusätzlich eine Anzahl an Fertigungseinheiten der Fertigungsanlage und/oder in jeweiliger Auslastung der Fertigungseinheiten berücksichtigt wird. Durch die Fertigungsaufträge können die verschiedensten Produkte beziehungsweise Produktportfolios hergestellt beziehungsweise gefertigt werden. Hierbei können die verschiedensten Werkzeuge beziehungsweise Anlagen beziehungsweise Fertigungsstraßen benötigt werden. Dementsprechend kann die Fertigungsanlage verschiedenste Fertigungseinheiten aufweisen. Diese einzelnen Fertigungseinheiten können beispielsweise für spezielle Produkte konzipiert sein und können verschiedene Auslastungen und/oder Kapazitäten aufweisen. Dies kann bei der Ermittlung der Fertigungsreihenfolge berücksichtigt werden, sodass an die jeweilige Situation eine optimale Fertigungsreihenfolge ermittelt werden kann.

In einem Ausführungsbeispiel ist vorgesehen, dass bei dem Ermitteln der Fertigungsreihenfolge eine Stückliste, Taktzeit und/oder Stückzeit eines jeweiligen Fertigungsauftrags der Fertigungsaufträge berücksichtigt wird. Somit kann auf die jeweilig aktuelle Situation bezüglich der Fertigung bedarfsgerecht reagiert werden, indem speziell die Fertigungsreihenfolge entsprechend ermittelt beziehungsweise bestimmt wird. Durch die Berücksichtigung eines jeweiligen Fertigungsauftrags kann die Fertigungsanlage und insbesondere die jeweiligen Fertigungseinheiten der Fertigungsanlage so geplant beziehungsweise gesteuert werden, dass die Fertigungsaufträge in einer effizienten Reihenfolge abgearbeitet werden können und dass beispielsweise auf intelligente Art und Weise passenden Fertigungseinheiten einem dazu passenden Fertigungsaufdruck zugeordnet wird.

In einem Ausführungsbeispiel ist vorgesehen, dass mit der ermittelten Fertigungsreihenfolge eine Priorisierung der Fertigungsaufträge durchgeführt wird. Zusätzlich oder anstatt kann ein Fertigungsauftrag der priorisierten Fertigungsaufträge, welcher von der Fertigungsanlage als nächstes ausgeführt werden soll, mit der höchsten Priorität gekennzeichnet werden. Die abzuarbeitenden Fertigungsaufträge können systemseitig dahingehend beurteilt beziehungsweise bewertet werden, welche Dringlichkeit beziehungsweise Wichtigkeit diese aufweisen. Somit kann systemseitig eine Priorisierung der Aufträge vorgenommen werden, sodass entsprechend die Fertigungsaufträge, welche zeitkritisch oder am wichtigsten sind, als erstes abgearbeitet werden können. Somit kann eine Priorisierung der Fertigungsaufträge vorgenommen werden, sodass vor allem der Fertigungsauftrag, welcher als nächstes ausgeführt werden muss, mit der höchsten Priorität versehen wird und somit dieser in der Fertigungsreihenfolge an der ersten Stelle beziehungsweise Position steht.

In einem Ausführungsbeispiel ist vorgesehen, dass basierend auf den Fertigungsaufträgen eine potentielle Auslastung der Fertigungsanlage bei einem Ausführen zumindest einer der Fertigungsaufträge prädiziert wird, wobei die prädizierte potentielle Auslastung bei dem Ermitteln der Fertigungsreihenfolge berücksichtigt wird.

Beispielsweise kann mit dem lernfähigen System oder einer Recheneinheit beziehungsweise Auswerteeinheit der Fertigungsanlage, in welcher beispielsweise das lernfähige System implementiert sein kann, eine Vorhersage beziehungsweise Ermittlung bei einer potentiellen Auslastung der zu bearbeitenden Fertigungsaufträgen durchgeführt werden. Somit kann beispielsweise anhand der Anzahl und/oder der Art der Fertigungsaufträge und insbesondere die zu produzierenden Produkte, derart analysiert werden, dass die Auslastung der Fertigungsanlagen bei Ausführen der Fertigungsaufträge vorhergesagt und zusätzlich prädiziert werden kann. Diese Vorverarbeitung bezüglich einer möglichen Auslastung kann als zusätzliche Information beziehungsweise Input für die ermittelte Fertigungsreihenfolge berücksichtigt werden, sodass die Fertigungsanlage optimaler die Fertigungsaufträge abarbeiten kann.

Ein weiterer Aspekt der Erfindung betrifft ein Verfahren zum Betreiben einer Fertigungsanlage, wobei die Fertigungsanlage basierend auf einer Fertigungsreihenfolge von Fertigungsaufträgen, welche mit einem Verfahren nach dem vorherigen Aspekt oder der vorteilhaften Weiterbildung davon ermittelt wurde, betrieben wird. Somit kann die ermittelte Fertigungsreihenfolge nach dem vorherigen Aspekt oder der vorteilhaften Weiterbildung dazu genutzt beziehungsweise verwendet werden, um die Fertigungsanlage, insbesondere effizient, betreiben zu können. Die ermittelte Fertigungsreihenfolge kann der Fertigungsanlage, insbesondere den einzelnen Fertigungseinheiten der Fertigungsanlage übermittelt beziehungsweise bereitgestellt werden, sodass die Fertigungsaufträge in einer besonders vorteilhaften Reihenfolge abgearbeitet werden können, ohne dass die Fertigungsanlage beeinträchtigt wird.

Beispielsweise kann die Fertigungsanlage eine Steuereinheit beziehungsweise eine Steuereinrichtung aufweisen, mit welcher basierend auf der Fertigungsreihenfolge der Fertigungsaufträge die Fertigungsanlage und insbesondere die einzelnen Einheiten beziehungsweise Werkzeuge beziehungsweise Anlagen der Fertigungsanlage gesteuert werden können.

In einem Ausführungsbeispiel des weiteren Aspekts ist vorgesehen, dass basierend auf der ermittelten Fertigungsreihenfolge Fertigungseinheiten der Fertigungsanlage und/oder Fertigungsschritte der Fertigungsanlage gesteuert werden. Mithilfe der ermittelten Fertigungsreihenfolge kann auf intelligente Art und Weise die jeweiligen Fertigungseinheiten und/oder Fertigungsschritte so gesteuert beziehungsweise angesteuert werden, dass die Fertigungsanlage möglichst effizient die Fertigungsaufträge abarbeiten kann.

Beispielsweise können abhängig von der ermittelten Fertigungsreihenfolge einzelne Fertigungseinheiten adaptiert werden, das heißt, dass beispielsweise ein Fertigungswerkzeug ausgetauscht wird. Ebenfalls können beispielsweise bei einer Fertigungsstraße beziehungsweise Produktionsstraße einzelne Schritte entsprechend angepasst werden, sodass die Fertigungsreihenfolge dazu verwendet wird, um die Fertigungsaufträge effizient abarbeiten zu können.

Ein weiterer Aspekt der Erfindung betrifft ein Fertigungsanlage-System für eine Fertigungsanlage mit einem lernfähigen System, wobei das Fertigungsanlage-System ausgebildet ist, um ein Verfahren nach einem der vorhergehenden Aspekte oder einer vorteilhaften Weiterbildung daraus auszuführen. Somit kann ein Verfahren nach den vorherigen Aspekten mithilfe des Fertigungsanlage-Systems ausgeführt beziehungsweise durchgeführt werden.

Bei dem Fertigungsanlage-System kann es sich um eine übergeordnete, insbesondere elektronische, Steuerungseinrichtung der Fertigungsanlage handeln. Mit Hilfe des Fertigungsanlage-System kann die Fertigungsanlage insbesondere die einzelnen Fertigungseinheiten der Fertigungsanlage verwaltet und insbesondere gesteuert beziehungsweise betrieben werden. Das Fertigungsanlage-System kann insbesondere ein lernfähiges System beinhalten. Dieses lernfähige System kann beispielsweise in dem Fertigungsanlage-System implementiert sein.

Insbesondere ist es ebenso denkbar, dass das Fertigungsanlage-System ausgebildet ist, um mehrere Fertigungsanlagen, welche beispielsweise in verschiedenen Gebäuden angeordnet sind, zu betreiben.

In einem Ausführungsbeispiel des weiteren Aspekts ist vorgesehen, dass das lernfähige System auf einem neuronalen Netz beruht. Insbesondere kann das lernfähige System auf einem künstlichen neuronalen Netz basieren. Durch die Verwendung eines neuronalen Netzes kann das Ermitteln der Fertigungsreihenfolge besonders vorteilhaft und effizient durchgeführt werden.

Ein weiterer Aspekt der Erfindung betrifft ein Computerprogramm, welches direkt in einem Speicher einer Steuereinrichtung eines Fertigungsanlage-Systems nach einem der vorhergehenden Aspekten ladbar ist, mit Programm-Mitteln, um ein Verfahren nach einem der vorhergehenden Aspekte auszuführen, wenn das Programm in der Steuereinrichtung des Fertigungsanlage-Systems ausgeführt wird.

Ein weiterer Aspekt der Erfindung betrifft einen elektronisch lesbaren Datenträger mit darauf gespeicherten elektronisch lesbaren Steuerinformationen, welche derart ausgesteuert sind, dass sie bei Verwendung des Datenträgers in eine Steuereinrichtung eines Fertigungsanlage-Systems nach einem der vorhergehenden Aspekte ein Verfahren nach einem der vorhergehenden Aspekte durchführen.

Ausführungsbeispiele eines Aspekts sind als vorteilhafte Ausführungsbeispiele der anderen Aspekte und umgekehrt anzusehen.

Vorteilhafte Ausgestaltungsformen des Verfahrens sind als vorteilhafte Ausgestaltungsformen des weiteren Verfahrens, des Fertigungsanlage-Systems, des Computerprogramms sowie des elektronisch lesbaren Datenträgers anzusehen. Das FertigungsAnlage-System, das Computerprogramm und der elektronisch lesbare Datenträger weisen gegenständliche Merkmale auf, welche eine Durchführung eines der Verfahren oder einer vorteilhaften Ausgestaltungsform davon ermöglichen.

Unter einer Recheneinheit, wie beispielsweise eine Auswerteeinheit, ein Endgerät oder einer Servereinheit, kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "lookup table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Sofern nicht anders angegeben, können alle Schritte des, insbesondere computerimplementierten, Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen, insbesondere computerimplementierten, Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die nachfolgende Figur zeigt Ausführungsbeispiele für die Planung der Fertigungsaufträge einer Fertigungsanlage.

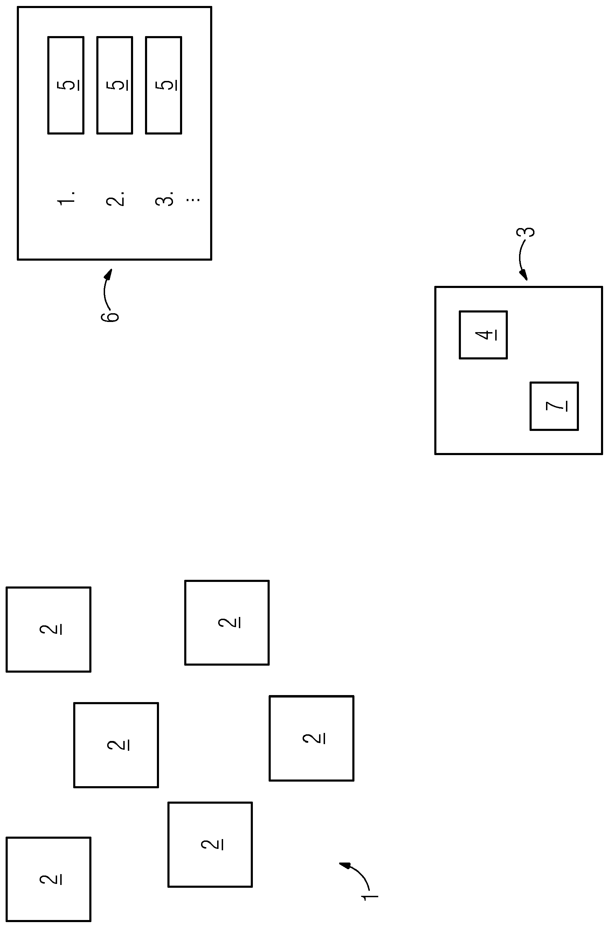

In der Figur ist schematisch eine Fertigungsanlage 1 dargestellt. Die Fertigungsanlage 1 dient insbesondere zur Fertigung von Produkten. Hierbei können die verschiedensten Produktportfolios berücksichtigt werden. Somit kann die Fertigungsanlage 1 als Produktionssystem oder Fertigungsnetzwerk bezeichnet werden. Die Fertigungsanlage 1 kann mehrere Fertigungseinheiten beziehungsweise Produktionseinheiten 2 aufweisen. Die Produktionseinheiten 2 können beispielsweise jeweils einen Produkttyp beziehungsweise ein Produktportfolio herstellen. Insbesondere können die Funktionseinheiten 2 modular aufgebaut sein, sodass je nach zu fertigendem Produkt eine Anpassung einer jeweiligen Fertigungseinheit 2 durchgeführt werden kann. Beispielsweise kann die Fertigungsanlage 1 mittels eines Fertigungsanlage-Systems 3 betrieben beziehungsweise gesteuert werden. Bei dem Fertigungsanlage-System 3 kann es sich um ein in der Fertigungsanlage 1 integriertes System handeln.

Ebenso denkbar ist, dass das Fertigungsanlage-System 3 auf einem Server, Backend oder Datenwolke extern zu der Fertigungsanlage 1 ausgestaltet ist und über Kommunikationsverbindungen mit der Fertigungsanlage 1 verbunden ist. Beispielsweise kann das Fertigungsanlage-System 3 eine Steuereinrichtung 4 aufweisen, mit welcher die Fertigungsanlage 1 und insbesondere die einzelnen Fertigungseinheiten 2 gesteuert beziehungsweise angesteuert werden können.

Die Fertigungsanlage 1 kann für das Fertigen von Produkten Fertigungsaufträge 5 berücksichtigen. Mittels der Fertigungsaufträge 5 werden der Fertigungsanlage die zu fertigen Produkte, die Anzahl der zu fertigen Produkte und weitere Informationen zur Verfügung gestellt. Hierzu kann beispielsweise eine Fertigungsplanung durchgeführt werden. Insbesondere können die Fertigungsaufträge 5 in einer Fertigungsreihenfolge 6 der Fertigungsanlage 1 zur Verfügung gestellt werden, um die Fertigungsaufträge 5 in der entsprechenden Reihenfolge der Fertigungsreihenfolge 6 abarbeiten zu können.

Um diese Fertigungsreihenfolge 6 optimierter und insbesondere effizienter ermitteln beziehungsweise bestimmen zu können, kann ein lernfähiges System 7 verwendet werden.

Beispielsweise kann es sich bei dem lernfähigen System 7 um ein neuronales Netzwerk, insbesondere um ein künstliches neuronales Netzwerk beziehungsweise Netz handeln. Beispielsweise kann es bei dem lernfähigen System 7 um einen Softwarecode handeln, der auf einem computerlesbaren Speichermedium gespeichert werden kann. Insbesondere kann es sich bei einem lernfähigen System 7 um eine cloudbasierte Einheit, eine Recheneinheit, eine Servereinheit, ein Backend oder eine Computeranwendung handeln.

Insbesondere kann das lernfähige System 7 Bestandteil des Fertigungsanlage-Systems 3 sein.

Beispielsweise kann, mithilfe des lernfähigen Systems 7 die Fertigungsreihenfolge 6 für die Fertigungsanlage 1 ermittelt werden. Dabei werden nicht nur die einzelnen Fertigungseinheiten 2 berücksichtigt, sondern die Fertigungsreihenfolge 6 wird für die gesamte Fertigungsanlage 1 beziehungsweise einem Fertigungsnetz ermittelt. Somit können alle Einheiten der Fertigungsanlage 1 bei der Ermittlung der Fertigungsreihenfolge 6 berücksichtigt werden.

Im nachfolgenden wird ein Ausführungsbeispiel für das Ermitteln der Fertigungsreihenfolge 6 beziehungsweise die Planung der Fertigungsaufträge in ihrer Bearbeitungsreihenfolge erläutert.

Die Ermittlung der Fertigungsreihenfolge kann mittels künstlicher Intelligenz, insbesondere mittels bestärkendem Lernens, durchgeführt werden. Dies erfolgt auf einer übergeordneten Planungsebene innerhalb der Fertigungsanlage 1.

Die Fertigungsanlage 1 kann beispielsweise eine Fertigungshalle mit mehreren modularen Produktionsmitteln sein.

Hierbei kann die künstliche Intelligenz, wie zum Beispiel das lernfähige System 7, zu einem jeweiligen Zeitpunkt entscheiden, an dem freie Ressourcen oder Produktionsmittel der Fertigungsanlage 1 zu Verfügung stehen, welcher Fertigungsauftrag 5 vom Fertigungsnetzwerk beziehungsweise Fertigungsanlage 1 begonnen werden soll. Hierbei kann aus einer flexiblen Liste, also die Fertigungsreihenfolge 6, ausgewählt werden. Somit handelt es sich bei der Fertigungsreihenfolge 6 um eine flexible, jederzeit anpassbare, Liste. Die Entscheidung basiert hierbei einerseits auf der erwartbaren Auslastung der Fertigungsanlage 1 durch bereits begonnene Fertigungsaufträge und andererseits auf der Auslastung des Fertigungsverbunds beziehungsweise Fertigungsanlage 1 durch das Beginnen des jeweiligen Auftrags in der Fertigungsreihenfolge 6.

Das lernfähige System kann eine Indexposition in der Fertigungsreihenfolge 6 ausgeben, welche den Auftrag beziehungsweise Fertigungsauftrag 5 kennzeichnet, der als nächstes begonnen werden soll. Des Weiteren kann durch eine Belohnungsfunktion, die im bestärkenden Lernen genutzt wird, die Optimierung der Reihenfolgeplanung im Training beeinflusst werden. Hierbei kann beispielsweise ein Durchsatz der Fertigung maximiert werden oder auch etwa die Energieeffizienz maximiert werden oder Rüstaufwände minimiert werden. Des Weiteren kann hierbei eine gewichtete Kombination dieser oder ähnlicher Ziele optimiert werden. Außerdem kann durch diese Gestaltung auch ein Ausfallen eines Fertigungsmoduls beziehungsweise Fertigungseinheit 2 berücksichtigt werden. Bei diesem Vorgehen kann ein Fertigungsauftrag 5 immer mit einer Stückliste samt Taktzeit je Fertigungseinheit 2 und/oder Fertigungsschritt und einer Stückzahl assoziiert werden. Des Weiteren kann das lernfähige System 7 in einem übergeordneten Algorithmus eingebettet werden, beispielsweise des Fertigungsanlage-Systems 3.

Das lernfähige System 7 benötigt eine feste Dimension der Eingangsinformationen, um eine variierende Länge der Liste der zu beplanenden Fertigungsaufträge 5 zu verarbeiten. Hierbei kann ein übergeordneter Algorithmus verwendet werden, welche eine Logik vergleichen mit einem jeder- gegen -jeden-Turnier nutzt. Dieser Algorithmus kann ebenfalls in dem Fertigungsanlage-System 3 implementiert sein. Durch diesen kann eine besonders flexible Länge der Fertigungsreihenfolge 6 erreicht werden.

Beispielsweise kann das Trainieren des lernfähigen Systems 7 mittels diskreter Simulation anhand von historischen Daten oder mittels datengetriebenen Modellen trainiert werden. Hierbei stellt die Gestaltung des Beobachtungsraums und Aktionsraums eine Herausforderung dar. Bei dem Aktionsraum ist die Möglichkeit beziehungsweise die Handlungsfreiheit beziehungsweise Entscheidungsfreiheit des lernfähigen Systems 7 zu verstehen. Innerhalb des Aktionsraums kann das lernfähige System 7 entscheiden welche Option, also welcher Fertigungsauftrag 5, ausgeführt werden soll. Durch die Komplexität der Fertigungsanlage 1 wächst die Beobachtung mit der zwischen den Aktionen vergangenen Zeiten an.

Somit kann der Beobachtungsraum folgende Dimension aufweisen:

$$\texttt{Dimension = Anzahl der Produktionsanlagen x vergangene Zeiteinheiten}$$

Die Größe des Beobachtungsraums kann je nach Anwendung voll variieren. Für die Verarbeitung kann beispielsweise eine Datenkomprimierung vorgenommen werden. Hierfür gibt es mehrere Vorgehensweisen:

- Nutzung von "long short-term memory-Schichten"
- Nutzung einer "fast Fourier Transformation"
- Nutzung eines gleichmäßigen samplings mit einer fixen Anzahl an Werten über den Beobachtungsraum
- Nutzung der Zeitpunkte der ersten und letzten Auslastung einer Anlage im Beobachtungsraum.
- Nutzung eines "LSTM Autoencoder Netzwerk"
- Nutzung eines fixen Zeithorizonts für die Beobachtung, bei welcher alle weiteren Informationen nicht berücksichtigt werden.

Der Aktionsraum kann wiederum besonders designed beziehungsweise konzipiert werden, um nicht an fixe Produkttypen gebunden zu sein. Der Aktionsraum kann an der Anzahl der Auftragsauswahl gekoppelt sein. Wenn also das lernfähige System 7 aus einer Liste der Länge mit m Aufträgen optimal planen soll, beträgt die Dimension des Aktionsraums m, wobei m ungleich n (n entspricht der Anzahl an Produkttypen) sein kann. Die Aktion des lernfähigen Systems 7 entspricht dann dem Index des ausgewählten Auftrags auf der Liste der m Aufträge. Insbesondere kann mithilfe der vorliegenden Erfindung eine dynamische produktflexible Produktionsreihenfolgeplanung mittels "reinforcement learning" durchgeführt werden. Das lernfähige System 7 kann vor allem auf Basis der zu erwartenden Auslastung der Fertigung durch die begonnenen Produktionsaufträge sowie eine Stückliste mit Taktseiten und Fertigungseinheiten 2 in Verbindung mit einer Soll-Stückzahl die Entscheidung, welcher Auftrag als nächstes ausgeführt werden soll, treffen. Somit ist die Ermittlung der Produktionsreihenfolge 6 und insbesondere das Betreiben der Fertigungsanlage 1 flexibel in Bezug auf das Produktportfolio und die Anzahl der zu beplanenden Aufträge. Daher kann eine optimale Produktionsplanung vorgenommen werden. Insbesondere ermöglicht das lernfähige System 7 eine Optimierung der Fertigung mittels der Fertigungsanlage 1 während der Produktionszeit.

**Patentansprüche**

1. Verfahren zum Ermitteln einer Fertigungsreihenfolge (6) von Fertigungsaufträgen (5) einer Fertigungsanlage (1), wobei

   - das Ermitteln der Fertigungsreihenfolge (6) durch ein lernfähiges System (7) erfolgt, das darauf trainiert ist, anhand von vergangenen Daten der Fertigungsanlage (1) und/oder aktuellen Daten der Fertigungsanlage (1) die Fertigungsreihenfolge (6) zu ermitteln,
   - dem lernfähigen System (7) Informationen betreffend einer Auslastung der Fertigungsanlage (1) und/oder Informationen betreffend Fertigungsaufträge (5) bereitgestellt werden,
   - das Ermitteln der Fertigungsreihenfolge (6) anhand der Informationen betreffend die Auslastung der Fertigungsanlage (1) und/oder der Informationen betreffend die Fertigungsaufträge (5) erfolgt.

2. Verfahren nach Anspruch 1, **dadurch gekennzeichnet, dass** das lernfähige System (7) derart trainiert ist, das Ermitteln der Fertigungsreihenfolge (6) auf Basis der vergangenen Daten der Fertigungsanlage (1) und/oder auf Basis der aktuellen Daten der Fertigungsanlage (1) zu lernen.

3. Verfahren nach Anspruch 1 oder 2, **dadurch gekennzeichnet, dass** das Ermitteln der Fertigungsreihenfolge (6) mittels einer Bestärkendes-Lernen-Methode erfolgt, insbesondere das Lernen des Ermittelns der Fertigungsreihenfolge (6) abhängig von einer Belohnungsfunktion der Bestärkendes-Lernen-Methode dynamisch angepasst werden kann.

4. Verfahren nach einem der vorhergehenden Ansprüche, **dadurch gekennzeichnet, dass** das lernfähige System (7) darauf trainiert ist, anhand von den vergangenen Daten der Fertigungsanlage (1), insbesondere von historischen Daten und/oder den aktuellen Daten der Fertigungsanlage (1) in einem Simulationsmodell die Fertigungsreihenfolge (6) zu ermitteln.

5. Verfahren nach einem der vorhergehenden Ansprüche 1 bis 3, **dadurch gekennzeichnet, dass** das lernfähige System (7) darauf trainiert ist, anhand von den vergangenen Daten der Fertigungsanlage (1), insbesondere von historischen Daten und/oder den aktuellen Daten der Fertigungsanlage (1) in einem datengetriebenen Modell die Fertigungsreihenfolge (6) zu ermitteln.

6. Verfahren nach einem der vorhergehenden Ansprüche, **dadurch gekennzeichnet, dass** bei dem Ermitteln der Fertigungsreihenfolge (6) zusätzlich eine Anzahl an Fertigungseinheiten (2) der Fertigungsanlage (1) und/oder eine jeweilige Auslastung der Fertigungseinheiten (2) berücksichtigt wird.

7. Verfahren nach einem der vorhergehenden Ansprüche, **dadurch gekennzeichnet, dass** bei dem Ermitteln der Fertigungsreihenfolge (6) eine Stückliste, Taktzeit und/oder Stückzahl eines jeweiligen Fertigungsauftrags (5) der Fertigungsaufträge (5) berücksichtigt wird.

8. Verfahren nach einem der vorhergehenden Ansprüche, **dadurch gekennzeichnet, dass** mit der ermittelten Fertigungsreihenfolge (6) eine Priorisierung der Fertigungsaufträge (5) durchgeführt wird, insbesondere ein Fertigungsauftrag (5) der priorisierten Fertigungsaufträge (5), welcher von der Fertigungsanlage (1) als nächstes ausgeführt werden soll, mit der höchsten Priorität gekennzeichnet wird.

9. Verfahren nach einem der vorhergehenden Ansprüche, **dadurch gekennzeichnet, dass** basierend auf den Fertigungsaufträgen (5) eine potentielle Auslastung der Fertigungsanlage (1) bei einer Ausführung zumindest einer der Fertigungsaufträge (5) prädiziert wird, wobei die prädizierte potentielle Auslastung bei dem Ermitteln der Fertigungsreihenfolge (6) berücksichtigt wird.

10. Verfahren zum Betreiben einer Fertigungsanlage (1), wobei die Fertigungsanlage (1) basierend auf einer Fertigungsreihenfolge (6), welche mit einem Verfahren nach einem der vorhergehenden Ansprüche 1 bis 9 ermittelt wird, betrieben wird.

11. Verfahren nach Anspruch 10, **dadurch gekennzeichnet, dass** basierend auf der ermittelten Fertigungsreihenfolge (6) Fertigungseinheiten (2) der Fertigungsanlage (1) und/oder Fertigungsschritte der Fertigungsanlage (1) gesteuert werden.

12. Fertigungsanlage-System (3) für eine Fertigungsanlage (1) mit einem lernfähigen System (7), wobei das Fertigungsanlage-System (3) ausgebildet ist, um ein Verfahren nach einem der vorhergehenden Ansprüche 1 bis 11 auszuführen.

13. Fertigungsanlage-System (3) nach Anspruch 12, **dadurch gekennzeichnet, dass** das lernfähige System (7) auf einem neuronalen Netz beruht.

14. Computerprogramm, welches direkt in einen Speicher einer Steuereinrichtung eines Fertigungsanlage-System (3) nach Anspruch 12 ladbar ist, mit Programm-Mitteln, um ein Verfahren nach einem der Ansprüche 1 bis 11 auszuführen, wenn das Programm in der Steuereinrichtung des Fertigungsanlage-System (3) ausgeführt wird.

15. Elektronisch lesbarer Datenträger mit darauf gespeicherten elektronisch lesbaren Steuerinformationen, welche derart ausgestaltet sind, dass sie bei Verwendung des Datenträgers in einer Steuereinrichtung eines Fertigungsanlage-System (3) nach Anspruch 12 ein Verfahren nach einem der Ansprüche 1 bis 11 durchführen.

Europäisches
Patentamt

European
Patent Office

Office européen
des brevets

# EUROPÄISCHER RECHERCHENBERICHT

**Nummer der Anmeldung**

**EP 22 20 2472**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 204351 A1 (BOSCH GMBH ROBERT [DE]) 7. Oktober 2021 (2021-10-07)<br>* Zusammenfassung; Ansprüche 1, 4, 8 *<br>* Absätze [0008] - [0068] *<br>----- | 1-15 | INV.<br>G06Q10/1093<br>G06Q10/063 |
| Y | WO 2022/069498 A1 (WURTH PAUL SA [LU]) 7. April 2022 (2022-04-07)<br>* Absätze [0003] - [0010] *<br>* Absätze [0020] - [0026] *<br>* Absätze [0029], [0033] - [0037] *<br>* Absätze [0044] - [0048] *<br>* Absätze [0051] - [0061] *<br>----- | 1-15 | |
| Y | US 2021/278825 A1 (WEN CHENGTAO [US] ET AL) 9. September 2021 (2021-09-09)<br>* Zusammenfassung; Abbildungen 1-6 *<br>* Absätze [0004] - [0007] *<br>* Absätze [0016] - [0075] *<br>----- | 1-15 | |
| Y | DE 11 2020 003841 T5 (KAABERG JOHARD LEONARD [RU]) 19. Mai 2022 (2022-05-19)<br>* Absätze [0043] - [0077] *<br>----- | 1-15 | **RECHERCHIERTE SACHGEBIETE (IPC)**<br><br>G06Q |

Der vorliegende Recherchenbericht wurde für alle Patentansprüche erstellt

| Recherchenort | Abschlußdatum der Recherche | Prüfer |
|---|---|---|
| München | 15. März 2023 | Mülthaler, Evelyn |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 2472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-03-2023

| Im Recherchenbericht angeführtes Patentdokument | Datum der Veröffentlichung | Mitglied(er) der Patentfamilie | Datum der Veröffentlichung |
|---|---|---|---|
| DE 102020204351 A1 | 07-10-2021 | CN 113496347 A<br>DE 102020204351 A1<br>US 2021312280 A1 | 12-10-2021<br>07-10-2021<br>07-10-2021 |
| WO 2022069498 A1 | 07-04-2022 | LU 102103 B1<br>TW 202232356 A<br>WO 2022069498 A1 | 30-03-2022<br>16-08-2022<br>07-04-2022 |
| US 2021278825 A1 | 09-09-2021 | US 2021278825 A1<br>WO 2020040763 A1 | 09-09-2021<br>27-02-2020 |
| DE 112020003841 T5 | 19-05-2022 | CN 114556374 A<br>DE 112020003841 T5<br>GB 2603064 A<br>JP 2022544474 A<br>SE 1950924 A1<br>US 2022326664 A1<br>WO 2021029802 A1 | 27-05-2022<br>19-05-2022<br>27-07-2022<br>19-10-2022<br>14-02-2021<br>13-10-2022<br>18-02-2021 |

EPO FORM P0461

Für nähere Einzelheiten zu diesem Anhang : siehe Amtsblatt des Europäischen Patentamts, Nr.12/82